# EUROPEAN PATENT APPLICATION

(11) **EP 3 846 128 A1**
(43) Date of publication of application: **07.07.2021**
(21) Application number: 20150383.6
(22) Date of filing: 06.01.2020
(51) Int. Cl.: G06T 7/73, G06K 9/00, G01C 21/26, G05D 1/02

(54) **ESTIMATION OF ROAD MARKING POSITION IN AN EGO VEHICLE ENVIRONMENT**

(71) Applicant: Visteon Global Technologies, Inc., Van Buren Township, MI 48111 (US)
(72) Inventor: KARAMANOV, Nikola, 1113 Sofia (BG); PFEIFLE, Martin, 72297 Seewald (DE); OTTO, Mathias, 76327 Pfinztal-Söllingen (DE); VRIGAZOV, Hristo, 5806 Pleven (BG)
(74) Representative: Dummett Copp LLP

(57) **Abstract**

Methods for estimating the position of road markings on a ground surface in an environment surrounding an ego vehicle relative to a reference frame of the environment are described. Sets of image-space probability values are determined from image analysis of images of the environment, mapped to ground surface coordinates in a reference frame of the ego vehicle and allocated to grid cells. The resulting set of vehicle-space cell probability values (*Pv*(*X, Y*)) are converted into a set of environment-space cell probability values (*Pe*(*X', Y'*)) by using a position distribution of the ego vehicle and a filter function to account for an uncertainty in the estimated position of the ego vehicle and/or an uncertainty in the estimated heading of the ego vehicle. Systems suitable for implementing the methods are also described.

## Description

### TECHNICAL FIELD

Embodiments herein generally relate to systems and methods for estimating the position of road markings on a ground surface in an environment surrounding an ego vehicle relative to a reference frame of the environment, in particular by analysis of images obtained from a camera system of the ego vehicle, and may find application in the fields of advanced driver assistance systems and autonomous vehicles.

### BACKGROUND

Advanced driver assistance systems (ADAS) in vehicles and autonomous vehicle control systems rely on sensing aspects of the environment surrounding the ego vehicle to estimate the position of the vehicle relative to nearby objects and environmental features. For example, it can be important to estimate the position of road markings (pavement markings), such as lane markings, on the ground surface surrounding the vehicle.

Lane marking position information may allow an ADAS or autonomous vehicle control system to determine the current position of the ego vehicle and other vehicles relative to the lane structure of the road and to predict the trajectory of the vehicles relative to that lane structure, and is therefore useful in a range of ADAS or autonomous functions, such as lane-keeping, lane switching, junction navigation, highway exit/entry and so on.

ADAS-equipped vehicles and vehicles with autonomous vehicle control systems are often provided with a camera system that includes at least one camera capable of acquiring images of the environment around the ego vehicle. The camera has associated camera calibration parameters that describe how positional coordinates in the images relate to positional coordinates in the environment surrounding the vehicle in a reference frame that is fixed with respect to the vehicle. Under this approach, image analysis techniques may identify the coordinates of lane markings in such images, and to use the calibration parameters to map the image coordinates of the lane markings to the environment in the vehicle reference frame. In certain instances, inefficiencies may result from the above approach, where the vehicle is the reference frame.

### SUMMARY

A method is disclosed for estimating the position of road markings on a ground surface in an environment surrounding an ego vehicle relative to a reference frame of the environment.

The method comprises receiving, from a camera system of the ego vehicle, an image of the environment at an ego vehicle position, the image comprising a plurality of pixel units having image coordinates (*i*, *j*) in a reference frame of the image, analysing the image to determine for each pixel unit an image-space probability value (*Pp*(*i, j*)) comprising a probability of that pixel unit containing a road marking, mapping the image-space probability value (*Pp*(*i, j*)) of each pixel unit to ground surface coordinates (*x, y*) in a reference frame of the ego vehicle, thereby obtaining a set of vehicle-space cell probability values (*Pv*(*X, Y*)) for the ego vehicle position, each vehicle-space cell probability value (*Pv*(*X, Y*)) being the probability of a road marking being present in a corresponding cell (*X*, *Y*) of a grid into which the ground surface is divided in the reference frame of the ego vehicle.

The method further comprises determining an estimated position of the ego vehicle relative to the reference frame of the environment, and converting the set of vehicle-space cell probability values (*Pv*(*X, Y*)) into a set of environment-space cell probability values (*Pe*(*X', Y'*)) for that ego vehicle position using the estimated position of the ego vehicle, each environment-space cell probability value (*Pe*(*X', Y'*)) thereby providing the probability of a road marking being present in a corresponding cell (*X'*, *Y'*) of a grid into which the ground surface is divided in the reference frame of the environment.

Converting the set of vehicle-space cell probability values (*Pv*(*X, Y*)) into the set of environment-space cell probability values (*Pe*(*X', Y'*)) may include applying a filter function to account for an uncertainty in the estimated position of the ego vehicle.

The resulting set of environment-space cell probability values describes the probability that a ground surface cell location in the environment of the vehicle contains a road marking, such as a lane marking, therefore providing a way of estimating the position of the road markings. The results of the method may provide a useful input for in-vehicle ADAS and/or autonomous vehicle control system functions. Because the resulting set of cell probability values are provided in the reference frame of the environment, the method allows for more sophisticated interpretation of the environment than if the cell probability values were provided only with respect to the reference frame of the vehicle.

In an embodiment, the filter function comprises a Gaussian blur filter describing the uncertainty in the estimated environment-space position of the ego vehicle.

Determining the estimated position of the ego vehicle may comprise determining a position probability distribution for the position of the ego vehicle. In this case, the uncertainty in the estimated position of the ego vehicle may be expressed by the corresponding position probability distribution.

The method may comprise determining an estimated heading of the ego vehicle relative to the reference frame of the environment. In this case, converting the set of vehicle-space cell probability values (*Pv*(*X,* Y)) into the set of environment-space cell probability values (*Pe*(*X', Y'*)) may include applying a filter function to account for an uncertainty in the estimated heading of the ego vehicle at the ego vehicle position.

Determining the estimated heading of the ego vehicle may comprise determining a heading probability distribution for the heading of the ego vehicle. The uncertainty in the estimated heading of the ego vehicle may be expressed by the corresponding heading probability distribution.

Applying the filter function may comprise applying a plurality of filters describing a plurality of possible headings within the uncertainty of the estimated heading to obtain a plurality of sets of environment-space cell provisional probability values, and taking a weighted average of the sets of environment-space cell provisional probability values to produce the set of environment-space cell probability values. The plurality of possible headings and the weighted average may be selected according to a sigma points method.

The method may further comprise receiving, from the camera system of the ego vehicle, one or more additional images of the environment at the ego vehicle position, analysing the or each additional image to determine the image-space probability value (*Pp*(*i, j*)) for each pixel unit in the or each additional image and, for each of the images, mapping the image-space probability value (*Pp*(*i, j*)) of each pixel unit to ground surface coordinates (*x*, *y*) in the reference frame of the ego vehicle to obtain an intermediate set of vehicle-space cell probability values for each of the images. The intermediate sets of vehicle-space cell probability values may then be combined together to obtain the set of vehicle-space cell probability values for that ego vehicle position (*Pv*(*X, Y*))*.* In this case, each cell probability value in the set of vehicle-space cell probability values for the first position (*Pv*(*X, Y*)) may comprises an average of all non-zero cell probability values of the corresponding cells of the intermediate sets of vehicle-space cell probability values.

The camera system may comprise two or more cameras. In this case, the image and the additional image may be obtained from different cameras of the camera system.

In an embodiment, obtaining the vehicle-space cell probability values (*Pv*(*X, Y*)) comprises: (a) mapping the pixel unit probability value (*Pp*(*i, j*)) of each pixel unit to a corresponding ground surface point having ground surface coordinates (*x, y*) in a reference frame of the ego vehicle, and (b) allocating each ground surface point (*x, y*) to a corresponding cell (*X*, *Y*) of the grid.

Also described is a method for estimating the position of road markings on a ground surface in an environment surrounding an ego vehicle moving from a preceding ego vehicle position to a current ego vehicle position. The method comprises performing the method for estimating the position of road markings described above for each ego vehicle position, thereby to obtain sets of environment-space cell probability values for the current ego vehicle position and for the preceding vehicle ego position, and combining the set of environment-space cell probability values for the current ego vehicle position and the set of environment-space cell probability values for the preceding ego vehicle position to provide a set of modified environment-space cell probability values for the current ego vehicle position. Combining the sets of environment-space cell probability values may comprise taking a weighted average of the environment-space cell probability value of each cell for the current ego vehicle position and the environment-space cell probability value of a corresponding cell for the preceding ego vehicle position.

Also described is an ego vehicle system for estimating the position of road markings on a ground surface in an environment surrounding the ego vehicle relative to a reference frame of the environment. The system may comprise a camera system arranged to capture an image of the environment at an ego vehicle position, the image comprising a plurality of pixel units having image coordinates (*i*, *j*) in a reference frame of the image, and a processor system configured to receive the image from the camera system, analyse the image to determine for each pixel unit an image-space probability value (*Pp*(*i, j*)) comprising a probability of that pixel unit containing a road marking, map the image-space probability value (*Pp*(*i, j*)) of each pixel unit to ground surface coordinates (*x, y*) in a reference frame of the ego vehicle, thereby obtaining a set of vehicle-space cell probability values (*Pv*(*X, Y*)) for the ego vehicle position. Each vehicle-space cell probability value (*Pv*(*X, Y*)) is the probability of a road marking being present in a corresponding cell (*X*, *Y*) of a grid into which the ground surface is divided in the reference frame of the ego vehicle. The processor system may be configured to determine an estimated environment-space position of the ego vehicle and an estimated environment-space heading of the ego vehicle relative to the reference frame of the environment, and convert the set of vehicle-space cell probability values (*Pv*(*X, Y*)) into a set of environment-space cell probability values (*Pe*(*X', Y'*)) for that ego vehicle position using the estimated environment-space position of the ego vehicle, each environment-space cell probability value thereby providing the probability of a road marking being present in a corresponding cell (*X'*, *Y'*) of a grid into which the ground surface is divided in the reference frame of the environment. Converting the set of vehicle-space cell probability values (*Pv*(*X, Y*)) into the set of environment-space cell probability values (*Pe*(*X', Y'*)) may include applying a filter function to account for an uncertainty in the estimated environment-space position of the ego vehicle and/or an uncertainty in the estimated environment-space heading of the ego vehicle at the ego vehicle position.

The camera system may comprise two or more cameras. In this case, the processor system may be configured to receive images of the environment at the ego vehicle position from at least two cameras of the camera system, analyse each image to determine the image-space probability value (*Pp*(*i, j*)) for each pixel unit in the or each image, for each of the images, map the image-space probability value (*Pp*(*i, j*)) of each pixel unit to ground surface coordinates (*x*, *y*) in the reference frame of the ego vehicle to obtain an intermediate set of vehicle-space cell probability values for each of the images, and combine the intermediate sets of vehicle-space cell probability values together to obtain the set of vehicle-space cell probability values for that ego vehicle position (*Pv*(*X, Y*)).

### BRIEF DESCRIPTION OF THE DRAWINGS

Embodiments will now be further described, by way of example only, with reference to the accompanying drawings in which like reference signs are used for like features, and in which:
Figure 1 is a schematic plan view of a vehicle having multiple cameras on a roadway;
Figures 2a and 2b are schematic illustrations of images from two of the cameras of the vehicle of Figure 1;
Figure 3 shows a ground surface of the vehicle environment in plan view;
Figure 4 illustrates a method of estimating road marking positions;
Figure 5 illustrates a method of obtaining a set of cell probability values for a grid of cells on the ground surface in vehicle space;
Figure 6 illustrates a trajectory of an ego vehicle and an uncertainty in the position and heading of the ego vehicle at a time *t*;
Figure 7 illustrates applying a filter matrix during a method of converting a set of vehicle-space cell probability values into a set of environment-space cell probability values;
Figure 8 illustrates applying a plurality of filter matrices during a method of converting a set of vehicle-space cell probability values into a set of environment-space cell probability values;
Figure 9 illustrates a method of fusing sets of vehicle-space cell probability values derived from different images of the ground surface;
Figure 10 show two sets of vehicle-space cell probability values derived from different images of the ground surface and a fused set of vehicle-space cell probability values;
Figure 11 illustrates a trajectory of an ego vehicle and uncertainties in the positions and headings of the ego vehicle at times *t* and *t* + 1 together with corresponding sets of environment-space cell probability values that are combined to obtain a modified set of environment-space cell probability values; and
Figure 12 illustrates a method of obtaining a modified set of environment-space cell probability values.

### DETAILED DESCRIPTION

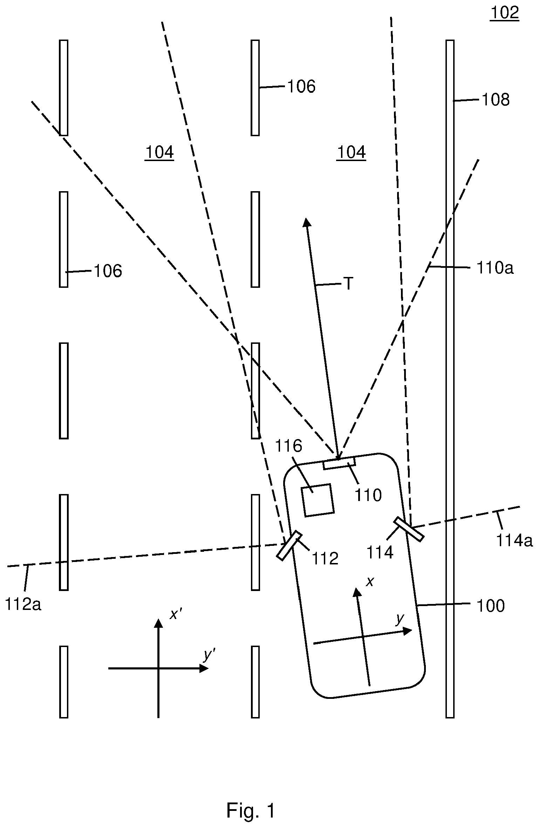

Figure 1 shows an ego vehicle 100 moving along a trajectory T in an environment 102. The environment 102 comprises a roadway divided into lanes 104 by road markings in the form of dashed-line lane markings 106. A further road marking, in the form of a solid line 108, delineates one edge of the roadway. The roadway forms a ground surface of the environment.

The vehicle 100 is provided with a camera system for capturing images of the environment 102, and in particular the roadway. The camera system includes a front-facing camera 110, a left-facing side camera 112 and a right-facing side camera 114. The field of view captured by the front-facing camera 110 is indicated at 110a, and the fields of view captured by the side-facing cameras 112, 114 are indicated at 112a and 114a respectively. It will be appreciated that these fields of view 110a, 112a, 114a are illustrative only, and that in practice the fields of view, along with the position of each camera and the number of cameras, could vary substantially from that shown.

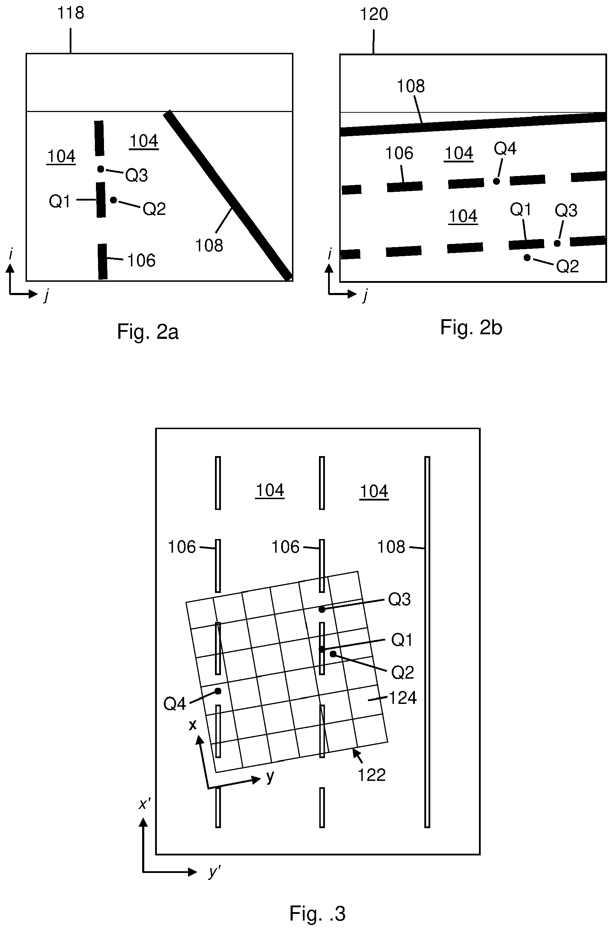

Each camera 110, 112, 114 of the camera system is arranged to capture successive images of the environment and output those images to a processor system 116 of the vehicle 100. As a result of the different fields of view 110a, 112a, 114a of the cameras 110, 112, 114, the images obtained at a given point in time (i.e. at a particular position of the vehicle 100) may include regions of the environment that can also be seen in images from other cameras, as well as regions that are only captured by one of the cameras. By way of example, Figure 2a is a schematic representation of an image 118 that may be obtained by the front-facing camera 110 and Figure 2b is a schematic representation of an image 120 that may be obtained by the left-facing side camera 112.

As is known in the field of ADAS, the images can be processed to map the image data from the reference frame of the two-dimensional image into a local reference frame of the vehicle 100.

For example, the processor system 116 may be configured to perform a mapping between coordinates in the reference frame of the image (*i*, *j*), also referred to hereafter as "image space", and coordinates (*x*, *y, z*) in the local reference frame of the vehicle 100, also referred to hereafter as "vehicle space". The coordinate system (*x, y, z*) in vehicle space may be centered on a fixed part of the vehicle, such as the center of the rear axle or the midpoint between the contact points between the rear tires and the road. The *x*-axis is aligned with the forward direction of the vehicle, the *y*-axis extends laterally and horizontally, and the *z*-axis extends vertically.

Known ground plane prediction methods may be used to estimate the vertical position (*z*) of the ground surface with respect to location in the *x*-*y* plane (i.e. the three-dimensional shape of the surface in vehicle space). Such methods may utilise image data from the camera system alongside further sensor data, such as Lidar data.

The processor system may be configured to determine and/or store calibration parameters that describe how the vehicle-space coordinates (*x, y, z*) relate to the image-space coordinates (*i*, *j*) for a given ground surface shape estimation. In this case, image-space coordinates (*i*, *j*) can be mapped to vehicle-space coordinates (*x, y, z*) by calculating the inverse function from the surface onto the image for predetermined points on the surface. In another example, the processor system may use a neural network to estimate the ground surface shape, in which case the mapping from image-space coordinates to vehicle-space coordinates may be provided as a direct output of the neural network.

Embodiments of the present method are concerned with estimating the position of road markings with respect to the ground surface. Therefore the image-space coordinates can be mapped onto the *z* = 0 plane in vehicle-space. In this way, the resulting estimated road marking positions are determined in the *z* = 0 plane and can be readily projected back onto the estimated three-dimensional ground surface shape if necessary.

Figure 3 is a representation of the ground surface on the *z* = 0 plane, showing how points in image space Q1, Q2, Q3 and Q4 in the images 118, 120 of Figures 2a and 2b map onto the ground surface.

For some ADAS applications, it would be desirable to estimate the likelihood that a point on the ground surface contains a road marking in a reference frame that is fixed with respect to the environment (also referred to hereafter as "environment space"). The coordinate system (*x', y'*) in environment space may for example be fixed on a pre-defined geographical point. One example of a suitable environment-space coordinate system is the universal transverse Mercator (UTM) system, although any suitable system, such as a system based on odometry relative to a starting point of the vehicle 100, could be used. The position and heading of the vehicle 100 within the environment-space coordinate system may be estimated from, for example, global positioning system (GPS), compass data, odometry and/or other suitable data.

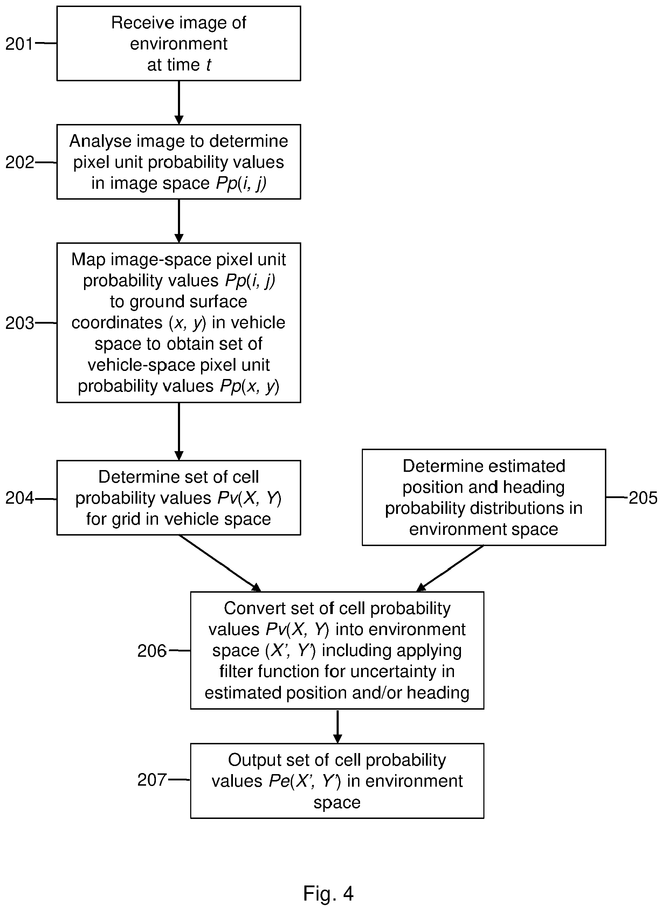

One embodiment of a method for estimating the position of the lane markings 106 on the ground surface surrounding the vehicle 100, relative to the reference frame of the environment (i.e. in environment-space coordinates (*x*', *y*')), will now be described with reference to Figure 4. The method of Figure 4 may be implemented by the processor system 116 of the vehicle 100.

At step 201, an image of the environment surrounding the ego vehicle 100 is received from the camera system. In this example, the method is performed using a single image, such as the image 118 of Figure 2a, although in practice a plurality of images may be used as will be explained in more detail later.

At step 202, the image is analysed to determine pixel unit probability values *Pp*(*i, j*) for the image, in image space. Each pixel unit probability value *Pp*(*i, j*) provides the probability that a given pixel unit, with image coordinates (*i, j*), contains a lane marking 106. The pixel units may correspond to individual pixels of the image, or to a group of neighbouring pixels.

The pixel unit probability values *Pp*(*i, j*) may be determined using any suitable image analysis method. One example employs a neural network trained to determine lane marking probability values for each pixel unit of the image. In addition to the image received in step 201, the image analysis method may also use as an input one or more images captured at preceding times.

In step 203, the pixel unit probability values *Pp*(*i, j*) are mapped to the corresponding ground surface coordinates (*x,* y) in the reference frame of the vehicle, using one of the mapping methods described above, and taking *z* = 0. The result of this mapping is a cloud of points in the *x*-*y* plane in vehicle space, each of which has an associated probability value *Pp*(*x, y*).

In step 204, a set of cell probability values *Pv*(*X, Y*) is determined. The *x-y* plane of the ground surface is divided into a plurality of cells forming a grid. Referring back to Figure 3, the grid 122 is aligned with the vehicle reference frame (i.e. the columns and rows of the grid are aligned with the *x* and *y* axes in vehicle space, with a corner of one cell aligned with the origin of the vehicle coordinate system). Each cell probability value *Pv*(*X, Y*) provides the probability that a corresponding grid cell 124 (at column *X* and row *Y* of the grid) contains a lane marking. The shape and size of the cells 124 of the grid 122 may be selected as appropriate to balance accuracy, computational effort and other parameters. In one example, the grid cells 124 are squares with dimensions of 100 mm x 100 mm (for clarity, the cells 124 in the grid 122 shown in Figure 3 are substantially larger than would be used in practice).

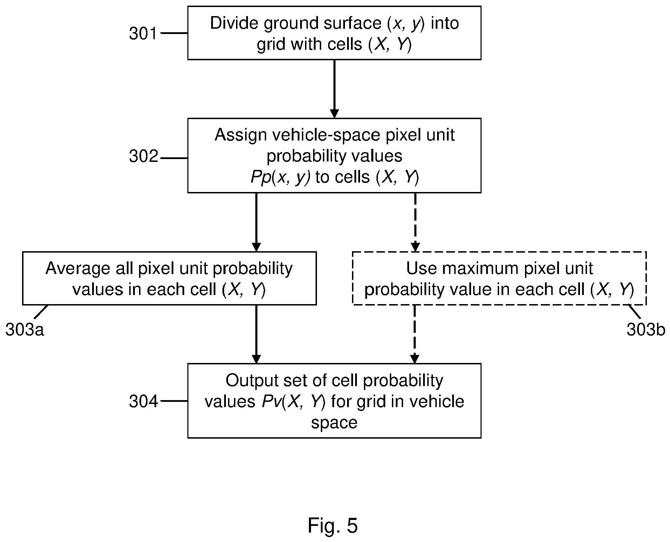

Figure 5 shows in more detail a method that can be used to determine the set of vehicle-space cell probability values *Pv*(*X, Y*) in step 204 of Figure 4.

In step 301, the ground surface is divided into a grid formed by a plurality of cells, identified by (*X*, *Y*).

In step 302, each of the vehicle-space pixel unit probability values *Pp*(*x, y*) is assigned to a grid cell (*X*, *Y*), in accordance with its coordinates (*x, y*) in vehicle space. In this way, multiple pixel unit probability values may be assigned to each cell (*X*, *Y*). By way of illustration, in Figure 3, points Q1 and Q2, and their associated pixel unit probability values, are assigned to the same grid cell.

Several methods can then be used to compute a single cell probability value *Pv*(*X, Y*) for each cell of the grid. For example, in step 303a of Figure 5, an average of all of the pixel unit probability values *Pp*(*x, y*) assigned to each cell (*X*, *Y*) is taken to determine a single cell probability value *Pv*(*X, Y*) for that cell. In an alternative approach, shown in step 303b of Figure 5, the maximum pixel unit probability value *Pp*(*x, y*) of all of the values assigned to that cell is taken as the cell probability value *Pv*(*X, Y*), discarding the remaining pixel unit probability values *Pp*(*x, y*). Other statistical approaches for computing the cell probability values *Pv*(*X, Y*) are also possible.

The process of step 303a or 303b is repeated for each cell in the grid. At step 304, the set of cell probability values *Pv*(*X, Y*) for all of the cells of the grid is provided as an output of the method of Figure 5.

Referring back to Figure 4, in step 205, the estimated position and estimated heading of the vehicle 100 with respect to the reference frame of the environment are determined. This may be achieved using, for example, GPS data, compass data, odometry data and so on, as is generally known in the art. In this example, the estimated position can be expressed as a position probability distribution that gives the probability of the vehicle 100 having a given position in environment space. Similarly, the estimated heading can be expressed as a heading probability distribution that gives the probability of the vehicle 100 having a given heading in environment space.

This step 205 provides a function allowing a transformation from vehicle-space coordinates (*x, y*) to environment-space coordinates (*x', y'*).

In step 206, the set of cell probability values *Pv*(*X, Y*) determined in step 204 is converted into environment-space coordinates, using the transformation function provided by step 205. In this way, the estimated environment-space position corresponding to each grid cell is identified.

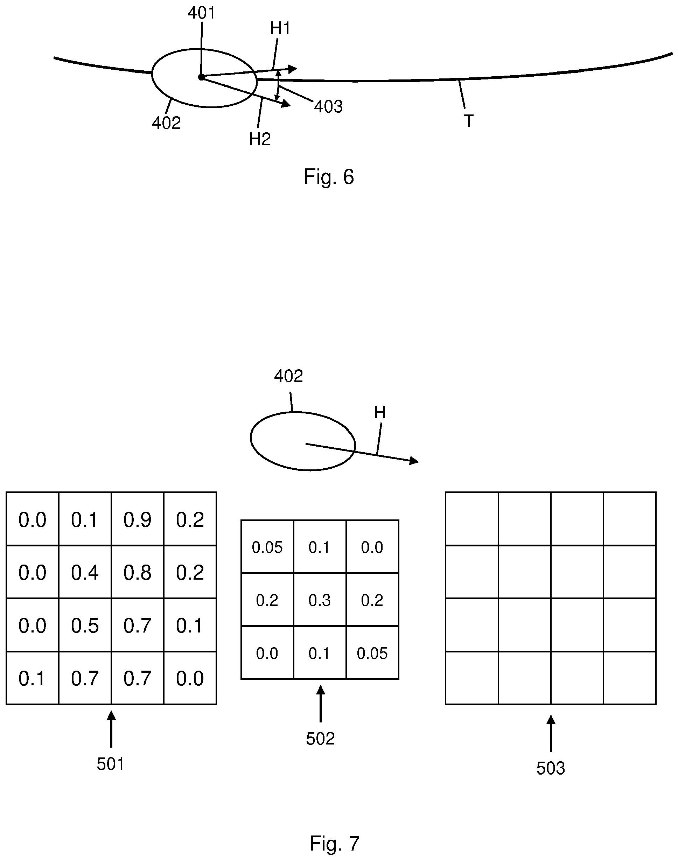

It will be appreciated that the position and heading of the vehicle 100, as determined in step 205, are not completely accurate but instead carry ranges of uncertainty, as expressed by the corresponding position and heading probability distributions. This is illustrated in Figure 6, which shows the most probable estimated position 401 of the vehicle as it moves along a trajectory T in environment space, as determined in step 205. The uncertainty in the position of the vehicle is approximated by an ellipse 402. The uncertainty in the heading of the vehicle is represented by an angle 403 between two possible headings H1, H2.

To account for these uncertainties, the conversion of the set of cell probability values *Pv*(*X, Y*) into environment-space coordinates in step 206 of Figure 4 involves the use of a filter function that expresses these uncertainties.

By way of illustration, Figure 7 provides a simplified example of the conversion of the set of cell probability values *Pv*(*X, Y*) into environment-space coordinates. A matrix 501 presents a set of cell probability values after conversion into environment space using a simple transformation function that maps vehicle-space coordinates to corresponding environment-space coordinates using the most probable position of the vehicle as determined in step 205 of Figure 4. The matrix 501 is convolved with a filter matrix 502, which accounts for the uncertainty 402 in the position of the vehicle in environment space (in this example it is assumed that the heading H is accurate). In this embodiment, the filter matrix 502 provides a two-dimensional Gaussian blur filter with asymmetrical axes in the *x-y* plane, with the longer axis aligned with the heading H. It will be appreciated that other types of filter could be used.

The resulting convolution is a matrix 503 that provides a set of cell probability values in environment space *Pe*(*X', Y'*), giving the probability of a given cell (at position *X', Y'* in the grid) in environment space containing a lane marking.

At step 207 of Figure 4, the set of environment-space cell probability values *Pe*(*X', Y'*) is output for use in one or more ADAS functions of the vehicle 100.

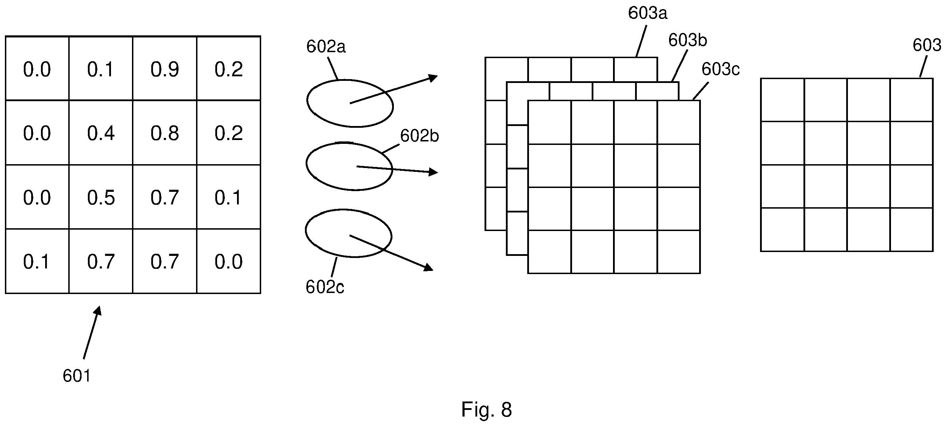

Figure 8 illustrates another simplified example of the application of a filter to a converted set of cell probability values *Pv*(*X, Y*) that may be used in step 206 of Figure 4. In this case, the uncertainties in both the position and the heading of the vehicle are taken into account by the filter.

In the method of Figure 8, a sigma points method is used to account for the uncertainty in the heading. After conversion into environment space, the matrix of cell probability values 601 is convolved with three different filter matrices 602a, 602b, 602c, which correspond to the three sigma points of the heading probability distribution of the heading. This results in three convolution matrices 603a, 603b, 603c. The three convolution matrices 603a, 603b, 603c are then combined by applying the sigma points weighted average to each value to produce a single matrix 603 containing a set of cell probability values in environment space *Pe*(*X', Y'*) for output in step 207 of Figure 4. Suitable sigma points methods are described for example in S. J. Julier and J. K. Uhlmann, "Unscented filtering and nonlinear estimation" (Proceedings of the IEEE, 2004, pages 401-422). Again, other types of filter could be used to account for the uncertainty in the heading.

It will be appreciated that, while Figures 7 and 8 illustrate a two-step approach in which a filter function is applied after conversion of the set of vehicle-space cell probability values *Pv*(*X, Y*) into environment space using a transformation function, in another embodiment a filter function could be combined with a transformation function such that the application of the combined function to the set of vehicle-space cell probability values *Pv*(*X, Y*) directly provides the set of cell probability values in environment space *Pe*(*X', Y'*), suitably adjusted for the uncertainties in position and heading according to the position and heading probability distributions, for output in step 207 of Figure 4.

In the example of Figure 4, the estimated position and estimated heading of the vehicle in environment-space coordinates, and the corresponding uncertainties in the position and heading, are expressed as probability distributions. However, other statistical approaches to expressing the estimated position and heading and the corresponding uncertainties are possible. For example, the estimated position and/or heading could be expressed as the mean or expectation value, with the corresponding uncertainties expressed as a variance. In another example, the estimated position and/or heading and the corresponding uncertainties could be expressed as a set of possible positions and/or headings with corresponding weights reflecting the likelihood of each possibility.

In step 206 of Figure 4, a filter function may be applied to account for uncertainty in position only, as illustrated in Figure 7. In such cases, it may not be necessary to determine the estimated heading of the vehicle or the corresponding uncertainty in step 205. In other cases, the filter function applied in step 206 may account only for the uncertainty in the heading, for example when the ego vehicle position in environment-space can be accurately determined. In these cases, it may still be necessary to determine the estimated ego vehicle position to facilitate conversion of the vehicle-space cell probability values to environment space in step 206. When uncertainties in both the estimated position and the estimated heading are accounted for in step 206, as illustrated in Figure 8, it may be possible to apply separate filters sequentially to account for each uncertainty, or to apply a single filter that simultaneously accounts for both uncertainties.

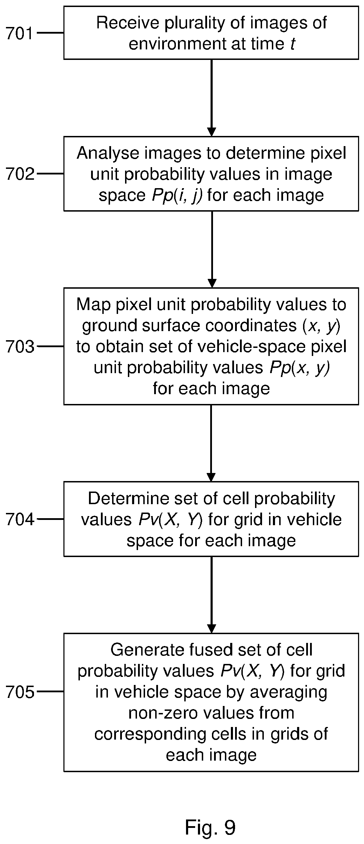

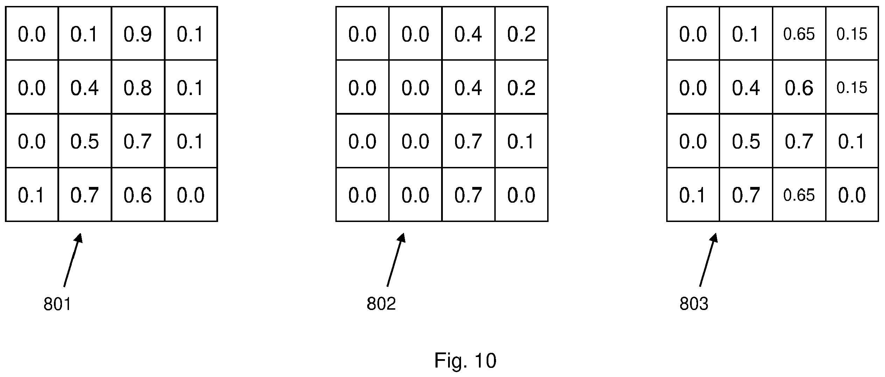

The implementation of the method of Figure 4 described above uses a single image from the camera system. However, multiple images of the environment, taken at the same vehicle position, can also be used as will now be described with reference to Figures 9 and 10.

Referring to Figure 9, when multiple images are to be used, the processor system receives the plurality of images in step 701. Each image has been captured at the same time *t*. Then, in step 702, image analysis is used to determine the image-space pixel unit probability values *Pp*(*i, j*) for each of the images, as described above with reference to step 202 of Figure 4.

In step 703, the pixel unit probability values *Pp*(*i, j*) for each image are mapped to the corresponding coordinates in vehicle space to obtain a set of vehicle-space pixel unit probability values *Pp*(*x, y*) for each image, as described above with reference to step 203 of Figure 4.

In step 704, a set of vehicle-space grid cell probability values *Pv*(*X, Y*) is determined for each image, as described above with reference to step 204 of Figure 4.

In step 705, the sets of vehicle-space grid cell probability values *Pv*(*X, Y*) for each of the images are combined to produce a single, fused set of vehicle-space grid cell probability values *Pv*(*X, Y*) for output to step 206 of Figure 4. In this embodiment, the sets of vehicle-space grid cell probability values *Pv*(*X, Y*) are combined by averaging the non-zero probability values for corresponding cells (*X*, *Y*).

For example, Figure 10 shows two sets 801, 802 of vehicle-space grid cell probability values *Pv*(*X, Y*) derived from two different images of the environment. Each value in the fused set 803 of vehicle-space grid cell probability values *Pv*(*X, Y*) is the average of non-zero probability values of the corresponding cells in the original sets 801, 802.

It will be appreciated that zero probability values will be generated for areas of the ground surface in vehicle space that are not within the field of view of the camera from which a corresponding image is obtained. Excluding such zero probability values from the calculation of the fused set of vehicle-space grid cell probability values *Pv*(*X, Y*) in step 705 of Figure 9 therefore avoids underestimation of the probability values when combining images from cameras with different fields of view, such as those illustrated in Figures 2a and 2b.

The methods described above with reference to Figures 1 to 10 can be performed repeatedly at successive times during movement of the vehicle 100, so that a set of cell probability values in environment space *Pe*(*X', Y'*) is output for successive positions of the vehicle. It is also possible to combine the sets of cell probability values obtained at successive times to improve further the accuracy of the results.

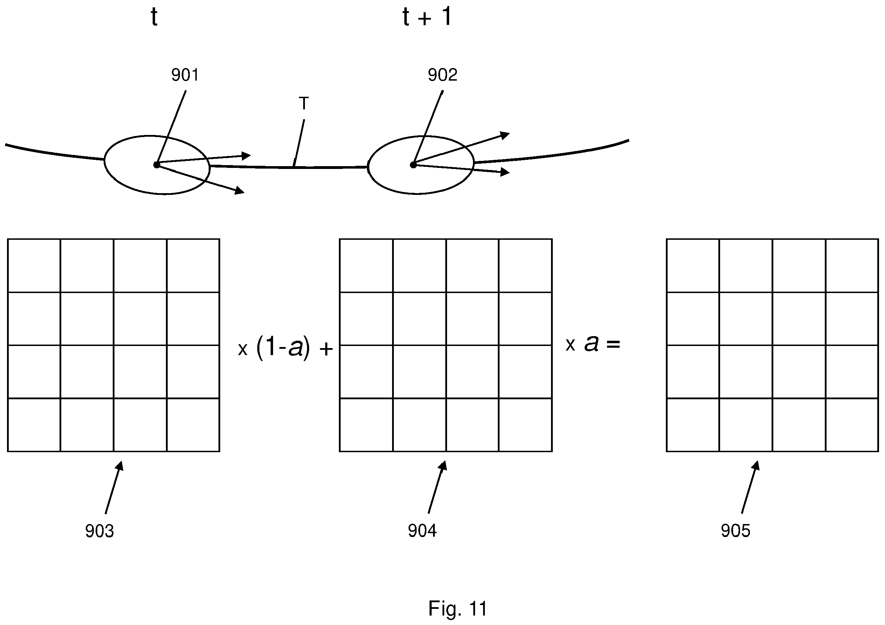

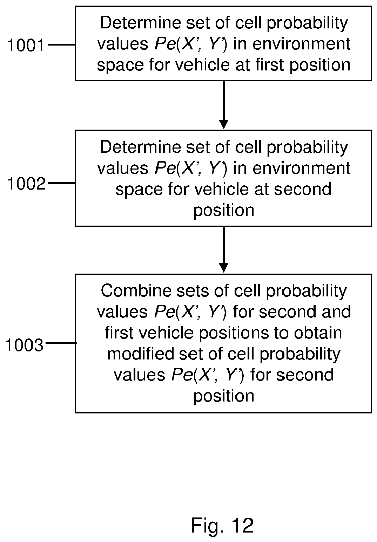

By way of example, Figure 11 shows the trajectory T of the ego vehicle 100 as it moves from a first position 901 at time *t* to a second position 902 at time *t* + 1. Referring additionally to Figure 12, a first set 903 of cell probability values in environment space *Pe*(*X', Y'*) is determined for the first position 901 (step 1001 in Figure 12), for example using the method of Figure 4. Then, when the vehicle reaches the second position 902, a second set 904 of cell probability values in environment space *Pe*(*X', Y'*) is determined for that second position 902 (step 1002 in Figure 12).

In step 1003 of Figure 12, the first and second sets 903, 904 of cell probability values in environment space *Pe*(*X', Y'*) are combined to provide a modified set 905 of cell probability values in environment space *Pe*(*X', Y'*), which is then output as the result for the second position 902.

The modified set 905 of cell probability values *Pe*(*X', Y'*) may be obtained by taking a weighted average of the first and second sets 903, 904. In the example of Figure 11, a weighting factor of (1 - *a*) is applied to the first set 903 and a weighting factor of a is applied to the second set 904, where a is a value between 0 and 1. The value of a may be dependent upon the time difference between *t* and *t* + 1, such that the influence of the first set 903 of cell probability values *Pe*(*X', Y'*) increases with decreasing time between the first and second positions 901, 902. It will be appreciated that, when combining the sets of cell probability values *Pe*(*X', Y'*) from successive times in step 1003 of Figure 12, any other suitable combination function could be used.

The output of the method of Figure 12 is therefore a modified set of cell probability values *Pe*(*X', Y'*) in environment space for the second position of the vehicle that can subsequently be used by ADAS functions. It will be appreciated that, in further iterations of the method, a modified set of cell probability values *Pe*(*X', Y'*) for a current position of the vehicle can be obtained by combining an unmodified set of cell probability values *Pe*(*X', Y'*) determined for the current position with a modified set of cell probability values *Pe*(*X', Y'*) determined for a previous position.

The methods described above are particularly suitable for estimating the position of lane markings on a roadway. However, it is also possible to direct the analysis of the images (e.g. at step 202 of Figure 3 and step 702 of Figure 9) to detect other road markings, such as edge delineations (108 in Figure 1), lane direction markings, restriction markings, give-way markings, and so on. The method may therefore be used to estimate the position of a particular type of road marking, or of multiple types of road marking.

The systems and methods of this disclosure can be embodied at least in part by artificial neural networks. Examples of suitable known networks for ADAS-equipped vehicle applications include ShuffleNet and FD-MobileNet. It is however conceivable that other machine learning models could be employed.

The term "processor system" as used herein may embody any combination of hardware and software useful for carrying out the methods described. The processor system may, for example, include one or more microprocessors, one or more data storage devices, one or more user interfaces, one or more camera system interfaces, and/or one or more communication devices. The processor system may be disposed in the vehicle in its entirety, but it is also conceivable that one or more elements or components of the processor system could be disposed remotely from the vehicle.

Further modifications and variations can also be contemplated without departing from the scope of the systems and methods of the present disclosure as defined in the appended claims.

## Claims

1. A method for estimating the position of road markings on a ground surface in an environment surrounding an ego vehicle relative to a reference frame of the environment, the method comprising:
receiving, from a camera system of the ego vehicle, an image of the environment at an ego vehicle position, the image comprising a plurality of pixel units having image coordinates (*i, j*) in a reference frame of the image;
analysing the image to determine for each pixel unit an image-space probability value (*Pp*(*i, j*)) comprising a probability of that pixel unit containing a road marking;
mapping the image-space probability value (*Pp*(*i, j*)) of each pixel unit to ground surface coordinates (*x*, *y*) in a reference frame of the ego vehicle, thereby obtaining a set of vehicle-space cell probability values (*Pv*(*X, Y*)) for the ego vehicle position, each vehicle-space cell probability value (*Pv*(*X, Y*)) being the probability of a road marking being present in a corresponding cell (*X*, *Y*) of a grid into which the ground surface is divided in the reference frame of the ego vehicle;
determining an estimated position of the ego vehicle relative to the reference frame of the environment; and
converting the set of vehicle-space cell probability values (*Pv*(*X, Y*)) into a set of environment-space cell probability values (*Pe*(*X', Y'*)) for that ego vehicle position using the estimated position of the ego vehicle, each environment-space cell probability value (*Pe*(*X', Y'*)) thereby providing the probability of a road marking being present in a corresponding cell (*X'*, *Y'*) of a grid into which the ground surface is divided in the reference frame of the environment;
wherein converting the set of vehicle-space cell probability values (*Pe*(*X, Y*)) into the set of environment-space cell probability values (*Pe*(*X', Y'*)) includes applying a filter function to account for an uncertainty in the estimated position of the ego vehicle.

2. The method of Claim 1, wherein the filter function comprises a Gaussian blur filter describing the uncertainty in the estimated environment-space position of the ego vehicle.

3. The method of Claim 1 or Claim 2, wherein determining the estimated position of the ego vehicle comprises determining a position probability distribution for the position of the ego vehicle.

4. The method of any of Claims 1 to 3, further comprising determining an estimated heading of the ego vehicle relative to the reference frame of the environment, wherein applying the filter function accounts for an uncertainty in the estimated heading of the ego vehicle at the ego vehicle position.

5. The method of Claim 4, wherein determining the estimated heading of the ego vehicle comprises determining a heading probability distribution for the heading of the ego vehicle.

6. The method of Claim 4 or Claim 5, wherein applying the filter function comprises applying a plurality of filters describing a plurality of possible headings within the uncertainty of the estimated heading to obtain a plurality of sets of environment-space cell provisional probability values, and taking a weighted average of the sets of environment-space cell provisional probability values to produce the set of environment-space cell probability values.

7. The method of Claim 6 when dependent on Claim 5, wherein the plurality of possible headings and the weighted average are selected according to a sigma points method.

8. The method of any preceding claim, further comprising:
receiving, from the camera system of the ego vehicle, one or more additional images of the environment at the ego vehicle position;
analysing the or each additional image to determine the image-space probability value (*Pp*(*i, j*)) for each pixel unit in the or each additional image; and
for each of the images, mapping the image-space probability value (*Pp*(*i, j*)) of each pixel unit to ground surface coordinates (*x, y*) in the reference frame of the ego vehicle to obtain an intermediate set of vehicle-space cell probability values for each of the images, and combining the intermediate sets of vehicle-space cell probability values together to obtain the set of vehicle-space cell probability values for that ego vehicle position (*Pv*(*X, Y*)).

9. The method of Claim 8, wherein each cell probability value in the set of vehicle-space cell probability values for the first position (*Pv*(*X, Y*)) comprises an average of all non-zero cell probability values of the corresponding cells of the intermediate sets of vehicle-space cell probability values.

10. The method of Claim 8 or Claim 9, wherein the camera system comprises two or more cameras, and wherein the image and the or each additional image are obtained from different cameras of the camera system.

11. The method of any preceding claim, wherein obtaining the vehicle-space cell probability values (*Pv*(*X, Y*)) comprises: (a) mapping the pixel unit probability value (*Pp*(*i, j*)) of each pixel unit to a corresponding ground surface point having ground surface coordinates (*x, y*) in a reference frame of the ego vehicle; and (b) allocating each ground surface point (*x*, *y*) to a corresponding cell (*X*, *Y*) of the grid.

12. A method for estimating the position of road markings on a ground surface in an environment surrounding an ego vehicle moving from a preceding ego vehicle position to a current ego vehicle position, the method comprising:
performing the method of any of Claims 1 to 10 for each ego vehicle position, thereby to obtain sets of environment-space cell probability values for the current ego vehicle position and for the preceding vehicle ego position; and
combining the set of environment-space cell probability values for the current ego vehicle position and the set of environment-space cell probability values for the preceding ego vehicle position to provide a set of modified environment-space cell probability values for the current ego vehicle position.

13. The method of Claim 12, wherein combining the sets of environment-space cell probability values comprises taking a weighted average of the environment-space cell probability value of each cell for the current ego vehicle position and the environment-space cell probability value of a corresponding cell for the preceding ego vehicle position.

14. An ego vehicle system for estimating the position of road markings on a ground surface in an environment surrounding the ego vehicle relative to a reference frame of the environment, the system comprising:
a camera system arranged to capture an image of the environment at an ego vehicle position, the image comprising a plurality of pixel units having image coordinates (*i*, *j*) in a reference frame of the image; and
a processor system configured to:
receive the image from the camera system;
analyse the image to determine for each pixel unit an image-space probability value (*Pp*(*i, j*)) comprising a probability of that pixel unit containing a road marking;
map the image-space probability value (*Pp*(*i, j*)) of each pixel unit to ground surface coordinates (*x, y*) in a reference frame of the ego vehicle, thereby obtaining a set of vehicle-space cell probability values (*Pv*(*X, Y*)) for the ego vehicle position, each vehicle-space cell probability value (*Pv*(*X, Y*)) being the probability of a road marking being present in a corresponding cell (*X*, *Y*) of a grid into which the ground surface is divided in the reference frame of the ego vehicle;
determine an estimated environment-space position of the ego vehicle and an estimated environment-space heading of the ego vehicle relative to the reference frame of the environment; and
convert the set of vehicle-space cell probability values (*Pv*(*X, Y*)) into a set of environment-space cell probability values (*Pe*(*X', Y'*)) for that ego vehicle position using the estimated environment-space position of the ego vehicle, each environment-space cell probability value thereby providing the probability of a road marking being present in a corresponding cell (*X'*, *Y'*) of a grid into which the ground surface is divided in the reference frame of the environment;
wherein converting the set of vehicle-space cell probability values (*Pv*(*X, Y*)) into the set of environment-space cell probability values (*Pe*(*X', Y'*)) includes applying a filter function to account for an uncertainty in the estimated environment-space position of the ego vehicle and/or an uncertainty in the estimated environment-space heading of the ego vehicle at the ego vehicle position.

15. An ego vehicle system according to Claim 13, wherein the camera system comprises two or more cameras, and the processor system is configured to:
receive images of the environment at the ego vehicle position from at least two cameras of the camera system;
analyse each image to determine the image-space probability value (*Pp*(*i, j*)) for each pixel unit in the or each image;
for each of the images, map the image-space probability value (*Pp*(*i, j*)) of each pixel unit to ground surface coordinates (*x*, *y*) in the reference frame of the ego vehicle to obtain an intermediate set of vehicle-space cell probability values for each of the images; and
combine the intermediate sets of vehicle-space cell probability values together to obtain the set of vehicle-space cell probability values for that ego vehicle position (*Pv*(*X, Y*)).
